# EUROPEAN PATENT APPLICATION

(11) **EP 1 376 803 A1**
(43) Date of publication of application: **02.01.2004**
(21) Application number: 02717076.0
(22) Date of filing: 05.04.2002
(51) Int. Cl.: H02G 3/16, B60R 16/02

(54) **ELECTRIC JUNCTION BOX**

(30) Priority: 06.04.2001 JP 2001109094
(71) Applicant: YAZAKI CORPORATION, Minato-ku Tokyo 108-8333 (JP)
(72) Inventor: NAKAMURA, Tsuyoshi, Yazaki Parts Co., Ltd., Kosai-shi, Shizuoka 431-0431 (JP)
(74) Representative: Haley, Stephen
(86) International application number: PCT/JP2002/003454
(87) International publication number: WO 2002/082608

(57) **Abstract**

One and common relay unit (27, 34) for an electric power source is constituted by a fuse (26, 33) common between vehicles or grades of cars and one or plural relays (26, 33) relative with said fuse. The relay unit (22, 23) is detachably attached to a covering member (24) having one or plural kinds of relay units. The relay (27, 34) and the fuse (26, 33) are thereby made a unit of one body, and since this unit may be composed to detachably attach the covering member (24), the electrical joint unit (21) has general-purpose property, thereby enabling to cost down.

## Description

### TECHNICAL FIELD

The present invention relates to an electrical joint box to be mounted on vehicles such as cars or automobiles.

### TECHNICAL BACKGROUND OF THE INVENTION

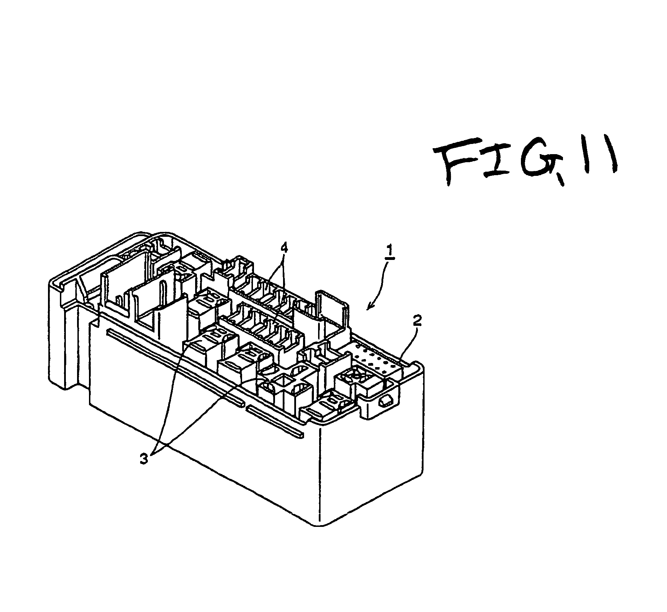

Fig. 11 shows an electrical joint box (the present description may employ a relay box as one example) to be mounted on vehicles such as cars. The illustrated electrical joint box 1 has a plurality of fuse cavities 3 and relay cavities 4 in a box main body. The respective fuse cavities 3 and relay cavities 4 are inserted with terminals (not shown) urged to press on ends of electric wires and connected to fuses and relays (not shown) through these terminals and electric wires. A power source circuit is constituted thereby.

By the way, in the above mentioned conventional electrical joint box, since difference in specification occurs in a used power source circuit per each of vehicles, otherwise although in the same vehicle, depending on grades of cars, since difference in specification occurs in the used power source circuit, it is necessary to newly establish a electrical joint box per each of vehicles and each of car grades. That is, the conventional electrical joint box has no general-purpose property, and gives a great deal of influences to production costs.

Besides conventionally, relays and fuses are individually mounted on the electrical j oint box, and spaces for respectively mounting the members are required, so that the electrical joint box is inevitably and dimensionally large-sized, inviting cost-up, and it is difficult to secure the mounting spaces.

Further, since the relays and fuses are individually mounted, the electrical joint box is necessary to surround therein circuits for connecting the respective members, so that jumper wires are prepared, which cause the cost-up and accordingly worsen productivity.

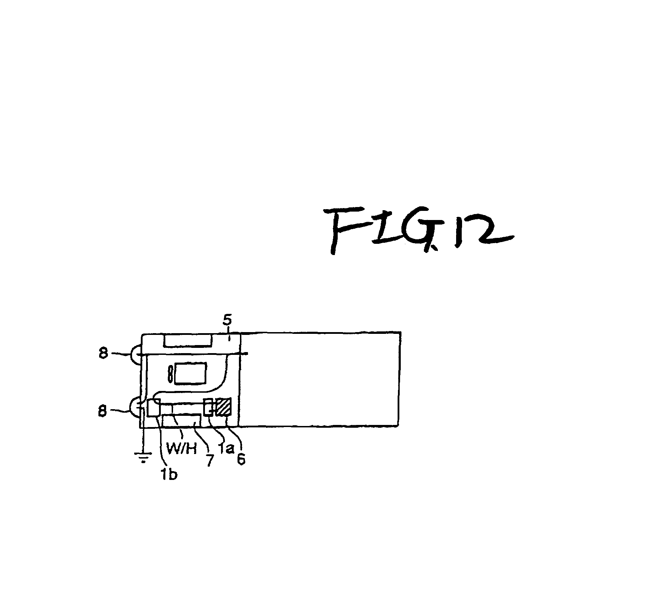

By making the electrical joint box large size, there might occur a case requesting the electrical joint box to be divided into a first and second electrical joint boxes 1a, 1b as shown in Fig. 12 by restraining conditions such as installing spaces for mounting on the vehicle. In this case, the first electrical joint box 1a is used for an ordinary electric source and is disposed in front of a battery within an engine room 5 and at a rear side of a tire 7, while the second electrical joint box 1b is used for controlling the vehicle, and a surplus space in front of the tire 7 is effectively used as a housing space. Reference numeral 8 designates head lamps.

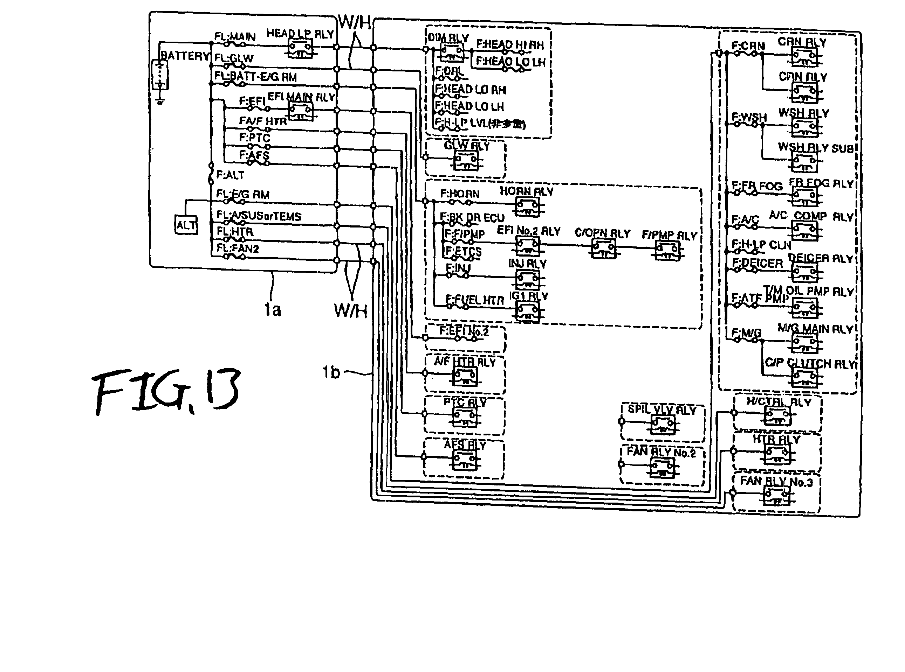

At this time, the first electrical joint box 1a and the second electrical joint box 1b are composed, for example, as shown in Fig. 13, and the relays as well as the fuses are arranged.

However, since this case requires connections of wire harnesses W/Hbetween the first and second electrical joint boxes, surplus working for the wire harnesses W/H are needed, and the number of the wire harnesses W/H are more and the diameter of the whole becomes large to forcibly cost up.

Thus, in view of the existing problems, the invention has been realized, and accordingly it is an object of the invention to provide such an electrical joint box having general-purpose properties, contributing to cost reduction, and accomplishing miniaturization of the electrical joint box.

### SUMMARY OF THE INVENTION

A first aspect of the invention is that an electrical joint box comprises a first electrical joint box and a second electrical joint box, has a relay function and a fuse function, and enables to have mutual relationship between the first electrical joint box and the second electrical joint box, and is characterized by accomplishing the relay function and the fuse function by semi-conductor groups.

This case accomplishes the relay function and the fuse function by use of the semi-conductor groups, thereby enabling to largely save the piece number of the electric wires between the first and second electrical joint boxes, more miniaturize these electrical joint boxes, and in turn to gather the circuits of the relay function and the fuse function to either one of the first and second electrical joint boxes so as to exclude the other electrical joint box.

A second aspect of the invention is characterized in that the electrical joint box has the first electrical joint box, the second electrical joint box electrically connected to said first electrical joint box, and the semi-conductor groups having the relay function and the fuse function attached to the first electrical joint box.

A third aspect of the invention is characterized in that the semi-conductor groups comprise the first semi-conductor group and the second semi-conductor group, and the first electrical joint box and the second electrical joint box are electrically connected through the electric wire connected to the first semi-conductor group and the electric wire connected to the second semi-conductor group, thereby enabling to save the piece number of the electric wires between the first and second electrical joint boxes.

### BRIEF DESCRIPTION OF THE DRAWINGS

Fig. 1 is a disassembled perspective view showing an embodiment of the electrical joint box according to the invention;
Figs. 2A to 2D are views of the power source circuits of the relay units;
Figs. 3A and 3B are views of the power source circuits of an automobile A;
Figs. 4A and 4B are views of the power source circuits of an automobile B;
Fig. 5 is a perspective view of a relay simplex unit;
Fig. 6 is a perspective view of a fuse simplex unit;
Fig. 7 is a disassembled perspective view showing another embodiment of the electrical joint box according to the invention;
Fig. 8 is a view of a circuit showing a further embodiment of the electrical joint box according to the invention;
Fig. 9 is a perspective view of the first electrical joint box showing another embodiment of the electrical joint box according to the invention;
Fig. 10 is a perspective view of the second electrical joint box showing a still further embodiment of the electrical joint box according to the invention;
Fig. 11 is a perspective view of the existing electrical joint box;
Fig. 12 is a schematic view showing attachment of the existing electrical joint box; and
Fig. 13 is a circuit view of the existing electrical joint box.

### PREFERRED EMBODIMENT OF EMBODYING THE INVENTION

Detailed explanation will be made to embodiments of the invention with reference to the attached drawings.

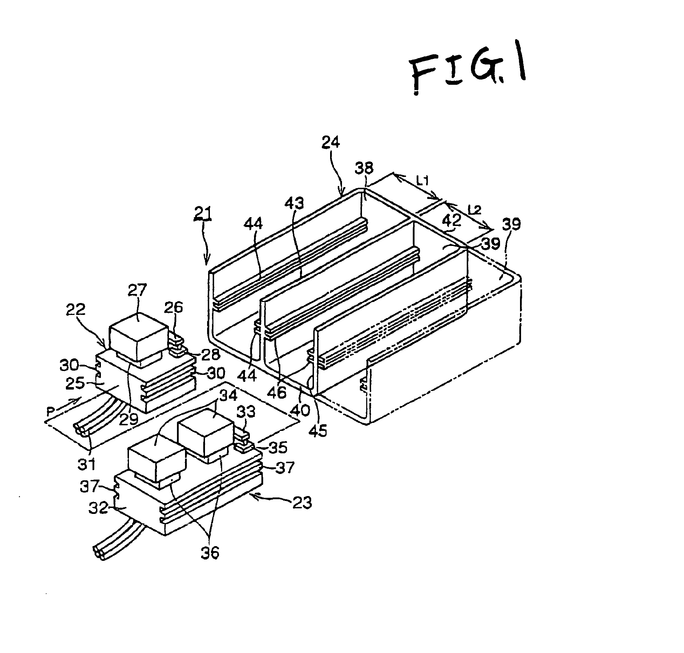

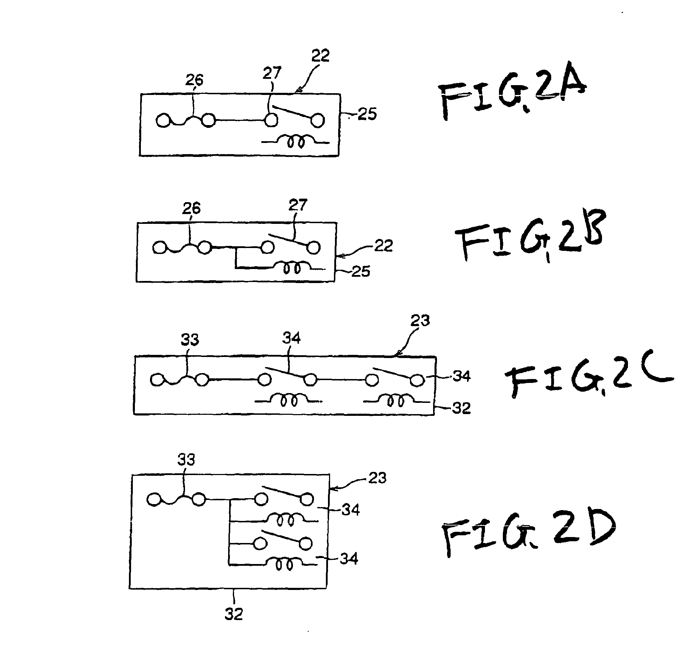

Fig. 1 is the disassembled perspective view showing one embodiment of the electrical joint box according to the invention. Fig. 2 is views of the power source circuits of the relay units.

In Fig. 1, the electrical joint box 21 to be mounted on a vehicle such as an automobile comprise a plurality of relay units 22, 23, an option unit (not shown), and a covering member 24 made of synthetic resin in correspondence to them.

At first, to explain the respective composing members, the relay unit 22 is composed of the synthetic resin-made unit case 25, a known fuse 26, and a known relay 27. The unit case 25 is formed to be rectangular, leaving an under side opened, and is formed at an upper wall with an integral fuse cavity 28 inserting the fuse 26 therein and an integral relay cavity 29 inserting the relay 27 therein. Further, the unit case 25 is formed with rails 30, 30 respectively in a couple of left and right walls along a later mentioned inserting direction P. Furthermore, a couple of front and rear walls are formed to be flat being perpendicular with said couple of left and right walls.

A connection terminal (not shown) electrically connecting a terminal (not shown) of the fuse 26 is inserted into the fuse cavity 2 8 . The connection terminal is pushed into the fuse cavity 28 through an under-side, opened portion of the unit case 25. In addition, terminals of electric wires 31 are crimped to the unit case.

Further, a connection terminal (not shown) electrically connecting a terminal (not shown) of the relay 27 is inserted into the relay cavity 29. The connection terminal is pushed into the relay cavity 29 via an under-side, opened portion of the unit case 25, similarly to the connection terminal of the fuse cavity 28. In addition, terminals of electric wires 31 are crimped to the unit case.

On the other hand, rails 30, 30 are formed to be parallel with a attaching direction P described later. In the case where the rails 30, 30 are defined with a couple of grooves in the left and right walls, projections defined between the grooves correspond to the couple of grooves. By the way, although not especially shown, the rails 30, 30 have catching projections (not limiting thereto).

The relay unit 23 is composed of the synthetic resin-made unit case 32, a known fuse 33, and a known relays 34, 34. The unit case 32 is formed to be rectangular, leaving an under side opened. A fuse cavity to which the fuse 33 is attached and relay cavities 36, 36 into which the relays 34, 34 are inserted are integrally formed at an upper wall of the unit case 32 . Further, with rails 37, 37 are respectively formed at a pair of left and right walls of the unit case 32 along the later mentioned inserting direction P. Furthermore, a pair of front and rear walls perpendicular to the pair of left and right walls are formed to be flat.

Incidentally, the length of the left and right walls is, in this embodiment, twice of the length of the left and right walls of the unit case 25. The length of the front and rear walls, that is, the width size is equal to the length (the width size) of the front and rear walls of the unit case 25.

A connection terminal (not shown) electrically connecting a terminal (not shown) of the fuse 33 is attached to the fuse cavity 35. The connection terminal is pushed into the fuse cavity 35 through an under-side, opened portion of the unit case 32. In addition, terminals of electric wires 31 are crimped to the unit case.

Further, connection terminals (not shown) electrically connecting terminals (not shown) of the relays 34, 34 are attached to the relay cavities 36, 36. The connection terminals are pushed into the relay cavities 36, 36 through an under-side, opened portion of the unit case 32, similarly to the connection terminal of the fuse cavity 35. In addition, terminals of electric wires 31 are crimped to the unit case.

On the other hand, rails 37, 37 are formed to be parallel with the attaching direction P described later. In the case where the rails 37, 37 are defined with a pair of grooves in the left and right walls, projections defined between the grooves correspond to the pair of grooves. By the way, although not especially shown, the rails 37, 37 have catching projections (not limiting thereto).

The fuses 26, 33 and the relays 27, 34 are known structure, thereby omitting explanation of their details. The option unit is an optional power source circuit prepared depending on the requirement in specification of the vehicle, and is constituted similarly to the relay units 22 or 23 (unit case and fuse and relay, or unit case and relay, otherwise unit case and fuse).

Herein, the relay units 22, 23 will be explained little more. The relay unit 22 is constituted, for example, as Fig. 2A or 2B, and th e relay unit 23 is constituted, for example, as Fig. 2C or 2D. Namely, the relay unit 22 for single common power source circuit is constituted by the fuse 26 and the relay 27 relative to the fuse 26. The relay unit 23 for single common power source circuit is constituted by the fuse 33 and the relays 34, 34 relative to the fuse 33.

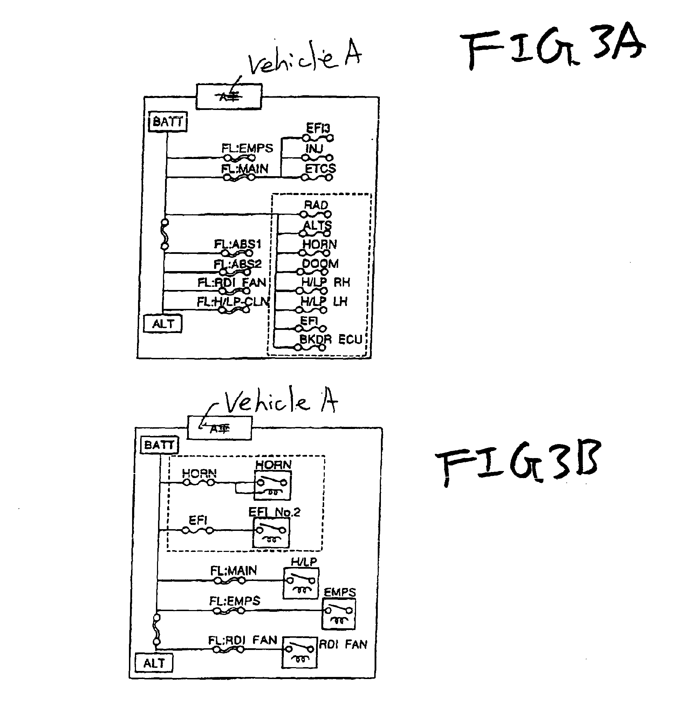

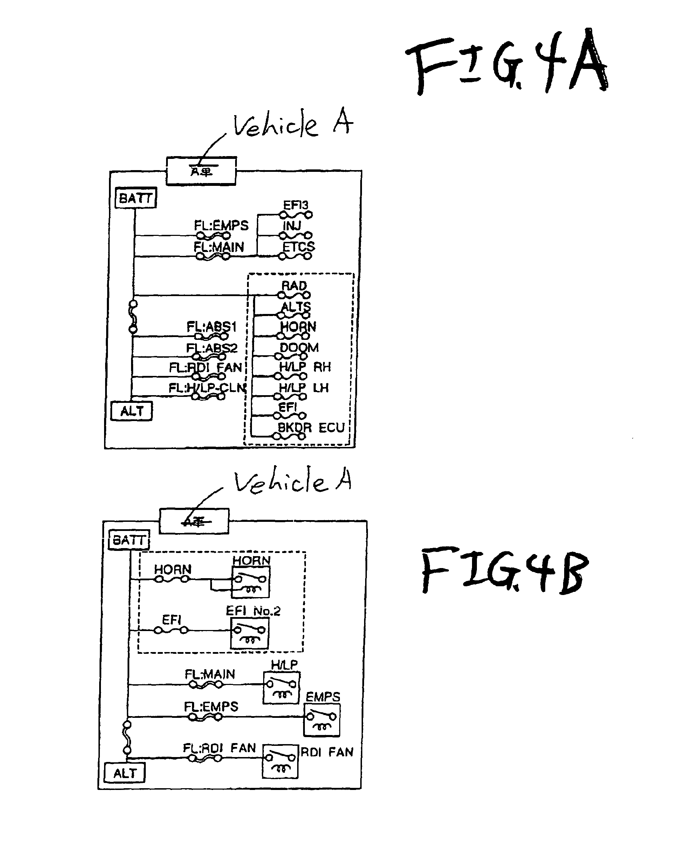

To explain more in detail, the relay units 22, 23 are, as shown in Figs. 3 and 4, made as a unit which takes out the fuses and relays used in common to an automobile A and an automobile B so as to constitute the power source circuit as mentioned above (the fuses and the relays used in common to grades may be taken out for making the unit).

The above mentioned relay units 22, 23 themselves have functions of the relay box.

Turning back to Fig. 1, the covering member 24 has an attaching portion 38 and an option attaching portion 39, and the relay units 22, 23 are attached to the attaching portion 38, while the option unit is attached to the option attaching portion 39.

The attaching portion 38 is a part sectioned with the side wall 41, the inner wall 42 and the partition wall 43 which are perpendicular to the base plate 40 of the covering member 24 and the relay units 22, 23 can be attached thereto by sliding it. Namely, rail sliding grooves 44, 44 are formed on surfaces of the side wall 41 and the partition wall 43 opposed to each other, so that the rails 30, 30, 37, 37 of the relay units 22, 23 slide thereon.

In the case where pairs of projections are respectively formed on the side wall 41 and the partition wall 43, spaces between each pairs of projections correspond the rail sliding grooves 44, 44. By the way, although not especially shown, the rail sliding grooves have catching concaves to be engaged with the catching projection (not limiting thereto).

The option attaching portion 39 is a part sectioned with the side wall 45, the inner wall 42 and the partition wall 43 which are perpendicular to the base plate 40 of the covering member 24 and the option unit can be attached thereto by sliding it. Namely, rail sliding grooves 46, 46 are formed on surfaces of the side wall 45 and the partition wall 43 opposed to each other so that the rail of the option unit slides thereon. The rail sliding grooves 4 6, 46 have the same forms as the rail sliding grooves 44, 44 of the attaching portion 38.

The covering member 24 is adapted such that the option attaching portions can be newly provided by arranging it side by side as needed (refer to the imaginary line of Fig. 1). This is effective in cost when attaching many option units.

The width size L2 of the option attaching portion 39 is determined to be the same as or integral multiple of the width size L1 of the attaching portion 38. Thereby the relation between the width size L2 of the option attaching portion 39 and the width size L1 of the attaching portion 38 is clarified and the general-purpose property is enhanced. In other words, the width size of such as the relay unit is standardized, and the general-purpose property is enhanced (it is sufficient to standardize the width size of the relay unit, and then determine the width L1 of the attaching portion 38).

In the above mentioned structure, the electrical joint box 21 of the invention is set up by attaching the relay units 22, 23 to the attaching portion 38 of the covering member 24, and attaching the option unit to the option attaching portion 39 of the covering member 24. At this time, the relay units 22, 23 and the option unit are detachably attached to it while sliding in the attaching direction shown with an arrow of P.

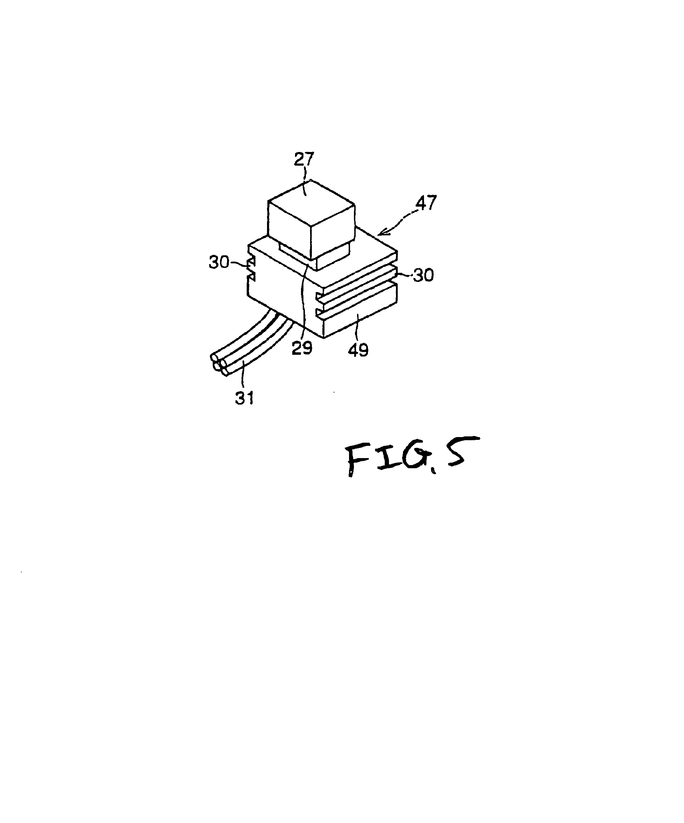

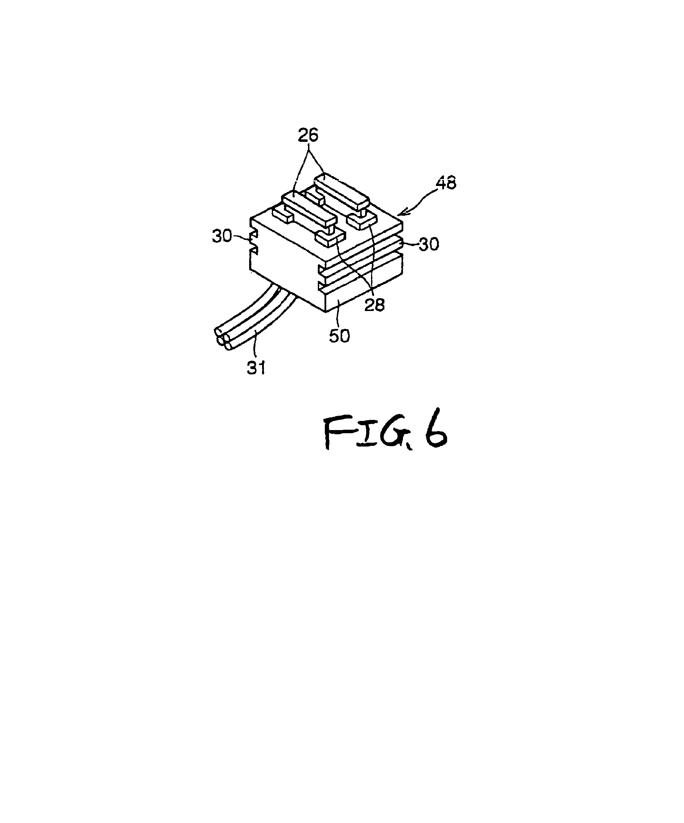

Incidentally, the relay units 22, 23 are not necessarily continuous. For example, three of the relay units 22 may be attached. In addition, a relay simplex unit 47 shown in Fig. 5 or a fuse simplex unit 48 shown in Fig. 6 may be attached (the relay simplex unit 47 is composed of the relay 27 and the unit case 49 having the relay cavity 29 and the rails 30, 30. The fuse simplex unit 48 is composed of the fuses 26, 26 and the relay unit 50 having the fuse cavities 28, 28 and the rails 30, 30). The option unit may be not to be attached.

As having explained referring to Figs. 1 to 6, the relay 27 (34) and the fuse 26 (33) are made as a unit of one body, and are so composed as to detachably attach the covering member 24, whereby the electrical joint box 21 may have the general-purpose property, so that the cost-down is attained. With the above mentioned structure, it is possible to realize a packaging of a system attaching in the vehicle.

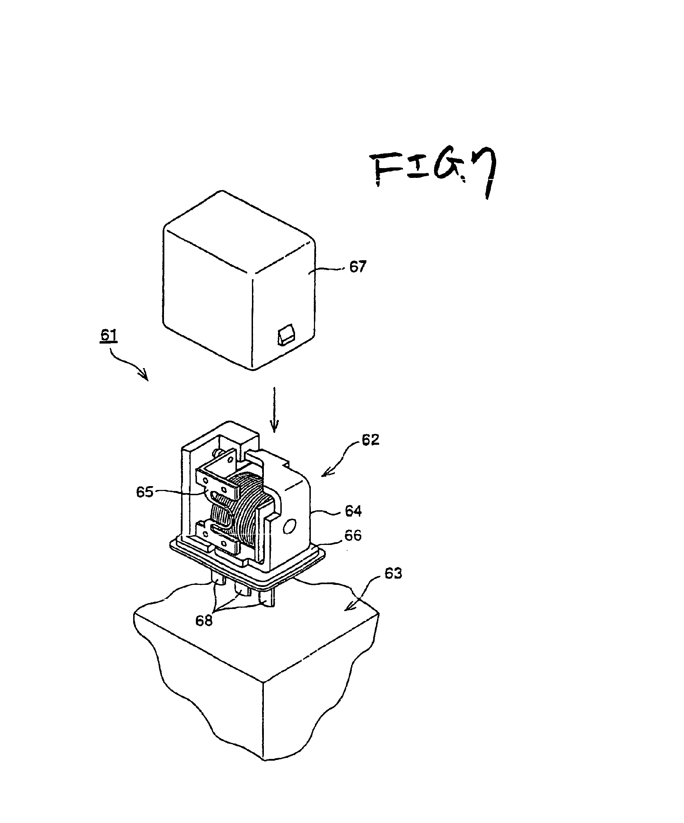

Fig. 7 is the disassembled perspective view showing another embodiment of the electrical joint box according to the invention. The electrical joint box 61 shown in Fig. 7 is composed of one or plural relay units 62 and a box main body 63 detachably attached with the relay units 62.

To explain the relay unit 62 in little more detail, the relay unit 62 is composed of a relay main body 64 and a fuse element 65. In other words, the relay and the fuse are packaged. That is, the relay unit 62 is constituted so that the fuse element is contained in the interior of the relay main body 64 partitioned by a base plate 66 of the relay main body and an outer cover 67 of the relay body 64.

Accordingly, when the relay unit 63 is connected and attached to the box main body 63 through the relay terminal 68 of the relay unit 62, similar effects to those of the above mentioned electrical joint box 21 can be displayed. Namely, having the relay unit 62 which packages the relay and the fuse, or the electrical joint box 61 is given the general-purpose property. Giving the general-purpose property to the electrical joint box 61, the cost-down can be attained. With the above mentioned structure, it is possible to realize the packaging of the system attaching in the vehicle.

Further, this embodiment does not need the jumper wire connecting the relay and the fuse, so that the mounting space of the relay and the fuse can be gathered, and in turn the miniaturization of the electrical joint box can be accomplished.

Figs . 8 to 10 show the other embodiment of the electrical joint box 70 according to the invention.

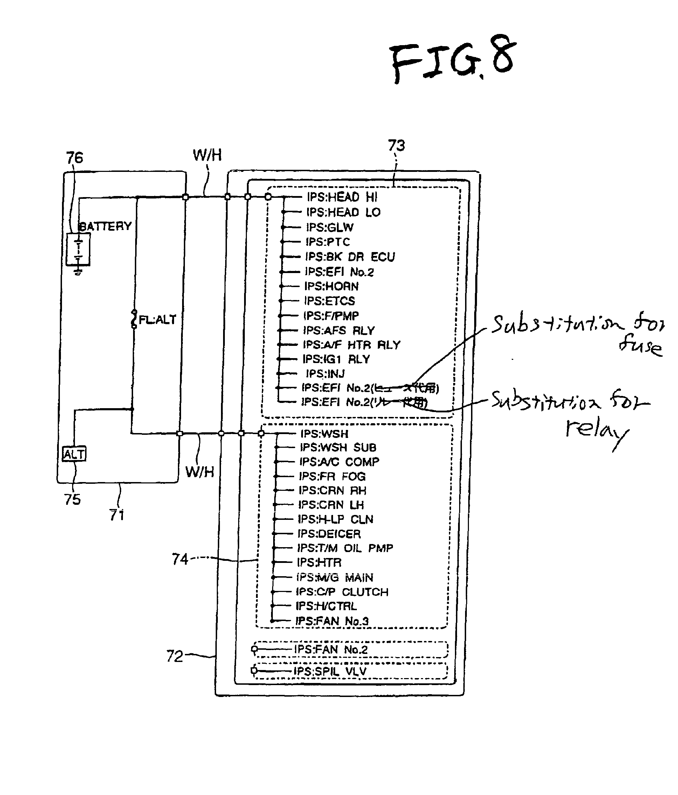

The electrical joint box 70 of this embodiment is, as shown in Fig. 8, furnishedwith the relay function and the fuse function, and comprises a first electrical joint box 71 and a second electrical joint box 72, where the relay function and the fuse function are realized by the semi-conductor groups 73, 74.

Accordingly, in the embodiment, by constituting the relay function and the fuse function by the semi-conductor groups 73, 74, the circuit compositions of the first electrical joint box 71 and the secondelectrical jointbox 72 may be largely simplified in comparison with, for example, the conventional structure of Fig. 13 . The wire harnesses W/H connecting the first and second electrical joint boxes 71, 72 are only two pieces, one fromALT 75 and the other from a battery 76, thereby largely saving the piece number of electric wires.

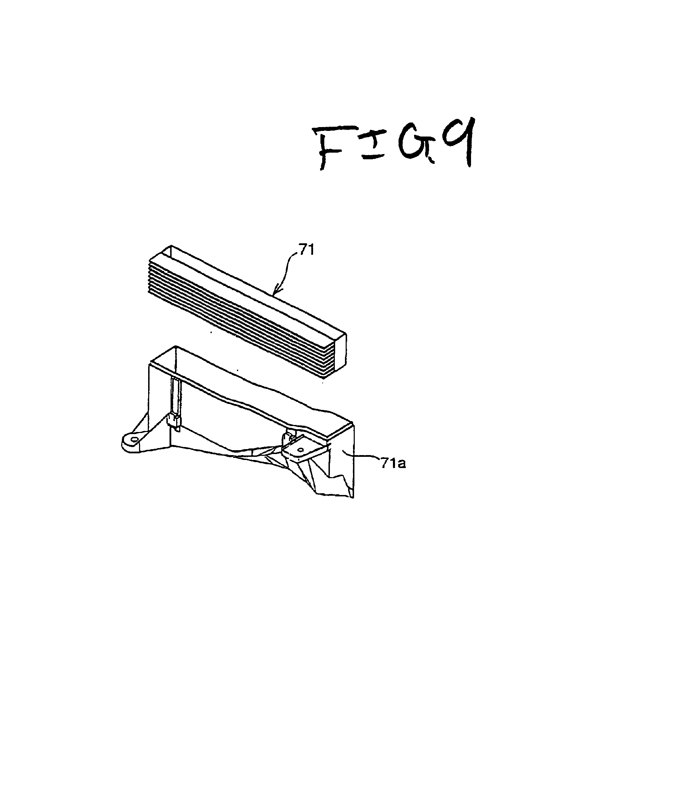

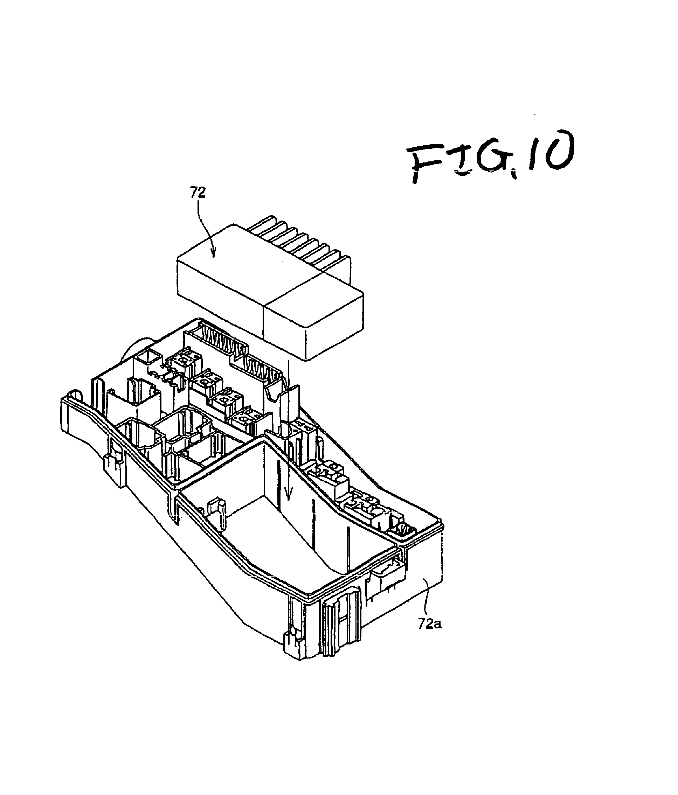

By simplifying the circuit composition and turning into the semi-conductor the first electrical joint box 71 as shown in Fig. 9 and the second electrical joint box 72 as shown in Fig. 10 respectively, the first electrical joint box 71 and the second electrical joint box 72 are composed in compact, so that a further miniaturization is effected. The first and the second electrical joint boxes 71, 72 are supported in a first case 71a and in a second case 72a secured to the side of the automobile outside of the drawing.

Incidentally, by turning into the semi-conductor so as to simplify the circuit composition, although omitting a drawing, the circuit of the first electrical joint box may be gathered in the second electrical joint box into one body, thereby enabling to exclude the first electrical joint box. Thus, the space of the electrical joint box 70 may be saved.

As to other matters, the electrical joint boxes of the invention are not limited to the above mentioned embodiments, but so far as not being beyond the subj ect matter of the invention, various modifications are of course available.

### INDUSTRIAL APPLICABILITY

As described above, according to the invention, the relay and the fuse are made as unit of one body, being constituted to detachably attach the cover member, whereby the general-purpose property is given to the electrical joint box. Giving the general-purpose property, the cost-down of the electrical joint box can be attained. Besides, it is possible to realize the packaging of the system attaching in the vehicle.

According to the invention, the option unit for the optional power source according to the requirement in specification can be attached to the covering member, so that the general-purpose property can be enhanced and a more cost-down can be realized.

According to the invention, cover members disposed with the plurality of option attaching portions can be newlyprepared as needed, so that the cost-down of the electrical joint box can be realized.

According to the invention, the relation between the width size of the option attaching portion and the width size of the attachingportion is clarified and the general- purpose property is enhanced. In other words, the width size of the relay unit maybe standardized for enhancing the general-purpose property.

According to the invention, the relay simplex unit constituted by the relay simplex is further adapted to be detachably attached to the cover member, thereby enhancing the general-purpose property.

According to the invention, furnishing the relay unit packaging the relay and the fuse enables the electrical joint box to have the general-purpose property. Having the general-purpose property, the cost-down of the electrical joint box is attained. In addition, it is possible to realize the packaging of the system equipped in the vehicle.

According to the invention, since the fuse element is directly provided to the relay terminal portion, the jumper wire connecting the relay and the fuse can be excluded, and in company with the exclusion, the mounting space of the relay and the fuse can be gathered, and in turn miniaturization of the electrical joint box can be accomplished.

According to the invention, the relay function and the fuse function are accomplished by the semi-conductor groups, the piece number of the electric wires connecting the first and second electrical joint boxes is largely saved, and a further miniaturization of the electrical joint box is possible. It is possible to gather the circuits of the relay function and the fuse function to one of the first and second electrical joint boxes so as to save the space of the electrical joint box.

## Claims

1. An electrical joint box including a relay function and a fuse function, and comprising a first electrical joint box and a second electrical joint box with mutual relationship,
wherein the relay function and the fuse function are accomplished by semi-conductor groups.

2. An electrical joint box comprising:
a first electrical joint box;
a second electrical joint box electrically connected to the first electrical joint box; and
semi-conductor groups including a relay function and a fuse function provided to the first electrical joint box.

3. An electrical joint box, wherein semi-conductor groups comprise a first semi-conductor group and a second semi-conductor group, and a first electrical joint box and a second electrical joint box are electrically connected through an electric wire connected to the first semi-conductor group and an electric wire connected to a second semi-conductor group.
